Europäisches Patentamt

European Patent Office

Office européen des brevets

(19)

(11) **EP 0 730 389 A2**

(12) **EUROPÄISCHE PATENTANMELDUNG**

(43) Veröffentlichungstag:
04.09.1996 Patentblatt 1996/36

(51) Int. Cl.$^6$: **H04Q 11/04**, H04Q 3/68

(21) Anmeldenummer: 96101675.5

(22) Anmeldetag: 06.02.1996

(84) Benannte Vertragsstaaten:
**AT BE CH DE DK FR GB IT LI NL**

(30) Priorität: 28.02.1995 DE 19506961

(71) Anmelder: **SIEMENS AKTIENGESELLSCHAFT**
**80333 München (DE)**

(72) Erfinder:
• **Löbig, Norbert, Dr.rer.nat.**
**D-64291 Darmstadt (DE)**
• **Eltschka, Herwig, Dipl.-Ing.**
**D-82319 Starnberg (DE)**

(54) **Verfahren zum Anschluss von Acces-Networks mit V5.2-Schnittstellen an Kommunikationssystemen mit nichtredundanten peripheren Einrichtungen**

(57) Um dem Ausfall von V5.2 Teilnehmern vorzubeugen, werden erfindungsgemäß die PCM30 Systeme einer V5.2 über eine Mehrzahl von peripheren Einrichtungen verteilt, welche mittels eines über das Koppelfeld des Kommunikationssystems aufgebauten Ringsystems kommunizieren können.

**FIG 2**

## Beschreibung

Die Erfindung betrifft ein Verfahren gemäß dem Oberbegriff des Patentanspruchs 1.

Die angesprochenen Kommunikationssysteme weisen nichtredundante periphere Einrichtungen auf. Dies sind beispielsweise Anschlußeinrichtungen für Teilnehmer oder für Leitungen, die Verbindungen zu weiteren Kommunikationssystemen darstellen. Weiterhin weisen Kommunikationssysteme aus wegen Zuverlässigkeitsanforderungen mindestens gedoppelte zentrale Einrichtungen auf. Dazu gehören zum Beispiel die zentrale Steuereinrichtung, Koppelfelder, Protokollabschlußeinrichtungen (zum Beispiel für Signalisierung Nr. 7), Hintergrundspeicher sowie Bedieneinrichtungen. Alle diese Einrichtungen sind u.a. softwaregesteuerte Ein- bzw. Mehrprozessorsysteme. Beispiele für Kommunikationssysteme sind Ortsvermittlungsstellen mit V5.2-Schnittstellen.

Die peripheren Einrichtungen erfüllen wesentliche, an die Sprachkanäle der peripheren Einrichtung gebundene vermittlungstechnische Aufgaben. Sie enthalten daher vermittlungstechnische, betriebstechnische und administrative Programme sowie die der Einrichtung zugehörige Dateninformationen wie Anschlußlage, Signalisierung, Berechtigungen, Rufnummern, individuelle Charakteristika von Verbindungsleitungen und Teilnehmeranschlüssen sowie Ausbauzustand, Betriebszustand und Konfiguration der betreffenden peripheren Einrichtung.

Pro PCM30 - Strecke einer V5.2 - Schnittstelle gibt es bis zu drei sogenannte V 5.2 Kommunikationskanäle (Communication Channels, C-Channels), welche die zentralen Protokolle sowie die PSTN-Signalisierung, die ISDN-Signalisierung und die ISDN-D-Kanal-Paketdaten administrativ zugeordneter V5.2 Teilnehmer heranführen. Diese PCM30-Strecken fallen mit dem durch Hardwarefehler hervorgerufenen Ausfall der sie terminierenden, nicht redundanten peripheren Einrichtung bis zu ihrer Reparatur und Wiederinbetriebnahme aus.

Ist an einer peripheren Einrichtung mehr als ein PCM-30 Link einer V5.2 Schnittstelle angeschlossen, so stehen im Falle des Ausfalls der peripheren Einrichtung i.a. nicht genügend (gemäß V5.2 Standard höchstens 3) Ersatzkanäle zur Ersatzschaltung der ausgefallenen V5.2 C-Channels auf der V5.2 Schnittstelle zur Verfügung. Da die PSTN- und ISDN- Signalisierungsdaten sowie die ISDN D-Kanal-Paketdaten verschiedener C-Channels nicht ohne erheblichen administrativen Aufwand im Teilnehmeranschlußnetz (Access-Network AN) und der betreffenden Ortsvermittlungsstelle (Local Exchange LE) temporär auf die jeweils dann noch verfügbaren C-Channels verteilt werden können, ist der Totalausfall von V5.2 Teilnehmern (Zugang zum Fernsprechnetz und/oder zu Paketnetzen im genannten Fall) unvermeidlich.

Die peripheren Einrichtungen sind über ein gedoppeltes Nachrichtenverteilsystem untereinander und mit der gemeinsamen Rechnerplattform verbunden, welche zentrale und koordinierende Aufgaben wahrnimmt.Wegen der durch den V5.2 Standard ermöglichten freizügigen Verteilung der Sprachkanäle über die V5.2 Schnittstelle hinweg sind die peripheren Einrichtungen, welche die mit Signalisierung beaufschlagten V5.2 C-Channels terminieren, i.a. verschieden von den peripheren Einrichtungen, welche die vermittlungstechnischen Aufgaben wahrnehmen. Hierdurch entsteht ein außergewöhnlich intensiver interner Nachrichtenverkehr zwischen der peripheren Einrichtung, welche den dem Teilnehmer zugeordneten V5.2 C-Channel mit Signalisierung terminiert, und den peripheren Einrichtungen, welche die jeweilige vermittlungstechnische Durchschaltung der Verbindungen dieses Teilnehmers durchführen. Das für diesen internen Nachrichtenverkehr nicht dimensionierte Nachrichtenverteilsystem wird somit einer signifikanten, eventuell unzulässigen Mehrbelastung ausgesetzt, was zur wesentlichen Minderung der Betrtiebsgüte (Call Failure Rate) führen kann oder durch Beschaltungsvorschriften (z.B. Beschränkung der Anzahl von Teilnehmern, C-Channels, usw.) vermieden werden muß.

Eine V5.2 Schnittstelle kann in Abhängigkeit von der Anzahl der Teilnehmer 1 bis 16 PCM30 Systeme besitzen. Bei Wachstum der Anzahl der Teilnehmer im Einzugsbereich des zugehörigen Access Network muß eine Erweiterung der V5.2 Schnittstelle in Erweiterungsschritten von einzelnen PCM30 Systemen bis hin zum Vollausbau der V5.2 Schnittstelle möglich sein, ohne daß pro V5.2 Schnittstelle entsprechende PCM30 Terminations in der Ortsvermittlungsstelle vorgehalten werden oder die bestehenden Streckenverkabelungen in der Ortsvermittlungsstelle verändert werden müssen.

In der deutschen Patentanmeldung P 44 22 805.8 ist ein Verfahren vorgeschlagen, mit dem die Verfügbarkeit eines Kommunikationssystems für die an periphere, ungedoppelte Einrichtungen angeschlossenen Teilnehmer sichergestellt werden kann, wenn Software bei Inbetriebnahme in dieselben geladen wird. Darin wird offenbart, wie insbesondere die V5.2 Kommunikationskanäle während des Ladevorgangs auf die verbleibende Systemhälfte umgeleitet werden. Damit können während dieser Zeit alle V5.2 Kommunikationskanäle bedient werden, womit für die betreffenden Teilnehmer die Systemverfügbarkeit
sichergestellt ist. Eine Vorgehensweise,wie bei Ausfall einer oder mehrerer peripheren Einrichtungen die Systemverfügbarkeit für die daran angeschlossenen V5.2 Teilnehmer sichergestellt werden kann, ist hier jedoch nicht angesprochen.

Der Erfindung liegt die Aufgabe zugrunde, ein Teilnehmeranschlußnetz (Access Network) mit V5.2 Schnittstellen an eine Ortsvermittlungsstelle mit nichtredundanten peripheren Einrichtungen derart anzuschließen und zu betreiben, daß keinerlei Einschränkungen in Bezug auf den V5.2 Standard hingenommen werden müssen, insbesondere Beschaltungsvorschriften bezüglich Anzahl, Lage, Redundanz der c-Kanäle und Anzahl, Lage der PCM30 Systeme.

Die Erfindung wird, ausgehend vom Oberbegriff des Patentanspruchs 1 durch die im kennzeichnenden Teil angegebenen Merkmale gelöst.

Wesentlich an der Erfindung ist, daß jede Schnittstelle eines Teilnehmeranschlußnetzes an mindestens eine der nichtredundanten peripheren Einrichtungen mit jeweils maximal einem PCM30 System angeschlossen wird. Vorteilhaft ist hieran, daß bei Ausfall einer nichtredundanten peripheren Einrichtung pro V5.2-Schnittstelle höchstens 3 C-Channels betroffen sein können, welche vermittels der V5.2-standardkonform definierbaren, maximal 3 für C-Kanalersatzschaltung vorgesehenen C-Channels ersatzgeschaltet werden können.

Insofern ist bei Verwendung nicht redundanter peripherer Einrichtungen dafür Sorge getragen, daß es für die Dauer des Ausfalls einer peripheren Einrichtung nicht zu Totalausfällen von V 5.2 Teilnehmern bezüglich des Zugangs zum Fernsprechnetz und/oder zu Paketvermittlungsnetzen kommt.

Zusätzlich wird im Koppelfeld wenigstens ein Kommunikationsring derart zwischen den einzelnen peripheren Einrichtungen geschaltet, daß derselbe die peripheren Einrichtungen, die mit der gleichen Schnittstelle verbunden sind, zusammenführt. Vorteilhaft hieran ist, daß der außergewöhnlich intensive interne Nachrichtenverkehr zwischen den V5.2-Schnittstellen terminierenden, nichtredundanten peripheren Einrichtungen ohne Belastung des internen Nachrichtenverteilsystems des Kommunikationssystems also ohne Erhöhung der Fehlverbindungsrate (Call Failure Rate) bewältigt werden kann.

Weitere Ausgestaltungen der Erfindung sind in den Unteransprüchen angegeben:

Gemäß Anspruch 2 ist vorgesehen, pro Schnittstelle eines Teilnehmeranschlußnetzwerks genau einen Kommunikationsring zu installieren, der genau die beteiligten, nichtredundanten peripheren Einrichtungen verbindet. Vorteilhaft hieran ist die Entkopplung der terminierten Schnittstellen, die Reduktion der benötigten Koppelnetzzugangskapazität und die geringere Fehlerwirkbreite.

Gemäß Anspruch 3 ist vorgesehen, daß die Mehrzahl von Teilnehmeranschlußnetzen derart an die weitere Mehrzahl von nichtredundanten peripheren Einrichtungen angeschaltet wird, daß gegebenenfalls wenigstens ein Eingang pro peripherer Einrichtung unbeschaltet bleibt. Damit ist die entsprechende Koppelnetzzugangskapazität verfügbar und kann zur Verstärkung des internen Nachrichtenverteilsystems herangezogen werden.

Gemäß Anspruch 4 ist vorgesehen, daß der im Koppelfeld geschaltete, wenigstens eine Kommunikationsring doppelt gerichtet ausgebildet ist, und als Mehrkanalverbindung mit flexibel einstellbarer Bandbreite durchschaltbar ist. Damit ist der Vorteil einer besonders guten Ausnutzung der verwendeten Übertragungskapazität verbunden. Weiterhin stellt eine derartige Vorgehensweise eine einfache sowie hinsichtlich der übertragungsbedingten Verzögerung günstige Lösung dar, da lediglich ein Protokoll verwendet wird und Probleme der Nachrichtenüberholung und -koordination (wie sie bei Paralleldurchschaltung einzelner 64 kB/s Kanäle auftreten) nicht beherrscht werden müssen.

Gemäß Anspruch 5 ist vorgesehen, daß die Funktionsfähigkeit des wenigstens einen Kommunikationsringes mit Hilfe zyklisch übertragener Testnachrichten überwacht wird. Damit ist der Vorteil verbunden, daß eine ermittelte Störung alarmiert und unter Benutzung einer im System residenten Entstörprozedur behoben wird.

Gemäß Anspruch 6 ist vorgesehen, daß die Teilnehmer betreffende Informationen gegebenenfalls über den gemeinsamen Kommunikationsring von einer der nichtredundanten peripheren Einrichtungen zu der nichtredundanten peripheren Einrichtung, die diese Informationen benötigen, geleitet werden. Damit ist der Vorteil einer freizügigen Vergabe der Sprachkanäle über die gesamte V5.2 Schnittstelle sowie einer Reduktion der Blockierungswahrscheinlichkeit (CALL FAILURE RATE) verbunden.

Gemäß Anspruch 7 ist vorgesehen, daß die Bandbreite am Kommunikationsring flexibel einstellbar ist. Damit ist der Vorteil einer Anschlußkostenreduktion für kleine V5.2 Schnittstellen verbunden, da in diesem Falle eine geringere Koppelnetzzugangskapazität für die beteiligten Kommunikationszusage benötigt wird.

Gemäß Anspruch 8 ist vorgesehen, daß bei Ausfall einer der nichtredundanten peripheren Einrichtungen die betroffenen Kommunikationsringe derart umkonfiguriert werden, daß die ausgefallene periphere Einrichtung nicht mehr in die betroffene Kommunikationsringe eingebunden ist. Damit ist der Vorteil einer geringeren Ausfallwahrscheinlichkeit von V 5.2 Teilnehmern verbunden.

Gemäß Anspruch 9 ist vorgesehen, daß bei Erweiterung einer bestehenden Schnittstelle mitels Hinzuschalten weiterer nichtredundanter peripherer Einrichtungen der betroffene eine Kommunikationsring derart umkonfiguriert wird, daß erstere in denselben eingebunden werden. Damit ist der Vorteil verbunden, daß im System wegen Zunahme der Teilnehmeranzahl neu hinzugeschaltete PCM30 Systeme bestehender Schnittstellen an jede diese Schnittstelle noch nicht terminierende nichtredundante periphere Einrichtung angeschlossen werden können ohne Vorhalten von PCM-Anschlußkapazität pro Schnittstelle.

Gemäß Anspruch 10 ist vorgesehen, daß der Betrieb der V5.2 spezifischen Kommunikationsringe HW unterstützt (Realisierung als ASIC) in der Weise erfolgen kann, daß nur jene Nachrichten innerhalb einer peripheren Einrichtung von einem Ring genommen werden, welche an die betreffende periphere Einrichtung gerichtet sind. Damit ist der Vorteil verbunden, daß sich die Kosten durch verminderte Anforderungen an die Leistungsfähigkeit der Prozessoren der Protokollabschlußeinrichtungen reduzieren und gleichzeitig der Nachrichtendurchsatz des Ringes erhöht werden kann.

Gemäß Anspruch 11 ist vorgesehen, daß die V5.2 spezifische Signalisierungsfunktion durch eine zentrale Protokollabschlußkapazität bereitgestellt wird, welche außerhalb der peripheren Einrichtungen liegt. In diesem Falle sind die zusätzlichen, internen, V5.2 spezifischen Kommunikationsringe um die betroffenen zentralen Protokollabschlußeinrichtungen zu erweitern. Diese Protokollabschlußeinrichtungen werden dann weitere Elemente der jeweiligen V5.2 spezifischen Kommunikationsringe. Damit ist der Vorteil verbunden der Anwendbarkeit des erfindungsgemäßen Verfahrens auch auf Kommunikationssysteme mit zentraler und damit kostenreduzierter und flexibel zuordenbarer Protokollabschlußkapazität.

Gemäß Anspruch 12 ist vorgesehen, daß im Falle redundanter (insbesondere gedoppelter) peripherer Einrichtungen das aufgezeigte Verfahren ebenfalls zur Anwendung kommen kann. Damit ist der Vorteil verbunden, daß dann die freizügige, systemweite Beschaltbarkeit aller peripheren Einrichtungen mit PCM30 Systemen beliebiger V5.2 Schnittstellen gegeben ist, ferner kann in diesem Falle wegen der Redundanz auf die Beschränkung des Anschlusses nur eines PCM30 Systems je V5.2 Schnittstelle an einer peripheren Einrichtung sogar verzichtet werden.

Gemäß Anspruch 13 ist vorgesehen, daß das beschriebene Verfahren ebenfalls Anwendung finden kann zum Anschluß der im US Markt üblichen Schnittstellen auf PCM24 Basis (z.B. Bellcore TR-NWT-000303) wie auch für alle proprietären Schnittstellen zwischen Teilnehmeranschlußnetzen und Ortsvermittlungsstellen, welche logisch aus einem oder mehreren PCM24 Systemen bestehen. Damit ist der Vorteil verbunden der Anwendbarkeit des erfindungsgemäßen Verfahrens auch auf Kommunikationssysteme mit PCM24 Systemen.

Im folgenden wird die Erfindung anhand eines Ausführungsbeispiels näher erläutert.

Es zeigen:

Figur 1    den Anschluß einer V5.2 Schnittstelle an ungedoppelte periphere Einrichtungen

Figur 2    den Anschluß von 3V5.2 Schnittstellen anungedoppelte periphere Einrichtungen.

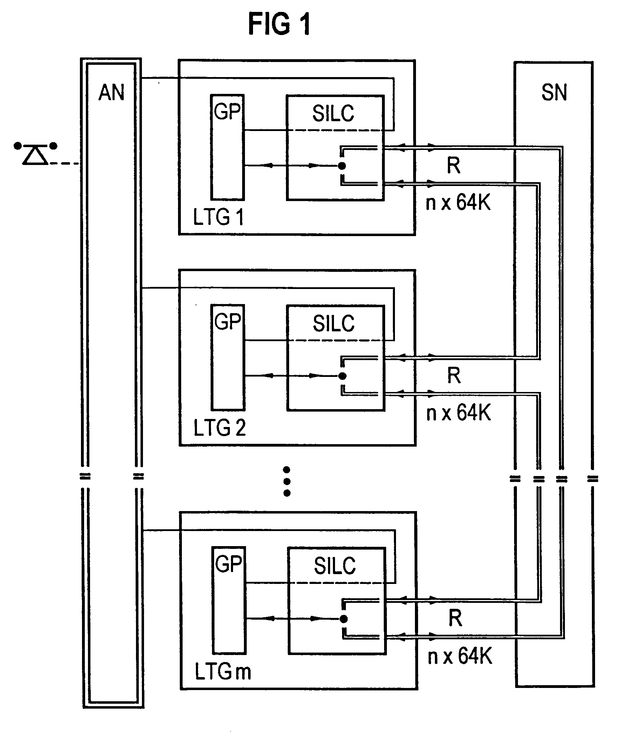

In Figur 1 ist aufgezeigt, wie ein Teilnehmeranschlußnetz AN mit V5.2 Schnittstellen S1...Se an periphere Einrichtungen $LTG_1$ ... $LTG_m$ eines Kommunikationssystems angeschlossen ist. Der Anschluß erfolgt erfindungsgemäß über maximal ein PCM-30 System pro peripherer Einrichtung. Über die Verbindungsleitungen werden die Kommunikationskanäle geleitet.Die peripheren Einrichtungen $LTG_1$...$LTG_m$ weisen ihrerseits jeweils eine Steuereinrichtung GP sowie eine Protokollabschlußeinrichtung SILC auf.

Wie in Figur 1 aufgezeigt, wird ein Ringsystem R über ein Koppelfeld SN und den peripheren Einrichtungen $LTG_1$...$LTG_m$ gebildet. Das Ringsystem R ist dabei derart ausgebildet, daß Nachrichten in jeweils beide Richtungen übertragen werden können. In der peripheren Einrichtung $LTG_1$ wird das Ringsystem R eingangsseitig der betreffenden Protokollabschlußeinrichtung SILC zugeführt, dort durchgeschleift und ausgangsseitig wieder dem Koppelfeld SN zugeführt. In der Protokollabschlußeinrichtung SILC wird eine Verbindung zur Steuereinrichtung GP geschaltet, über die Informationen mit dem Teilnehmeranschlußnetz AN ausgetauscht werden können. In gleicher Weise erfolgt das Einfügen der weiteren peripheren Einrichtungen $LTG_2$...$LTG_m$ in das Ringsystem R, wie in Figur 1 aufgezeigt.

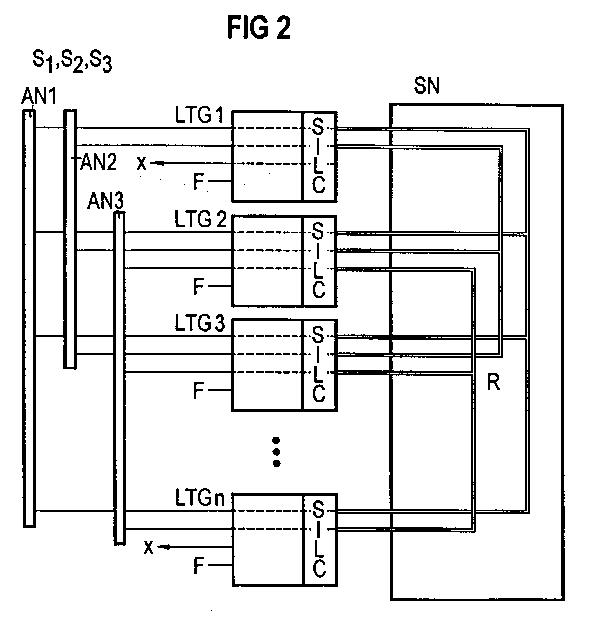

In Figur 1 ist der Anschluß lediglich eines Teilnehmeranschlußnetzes AN aufgezeigt. In der Praxis gilt es jedoch eine Mehrzahl solcher Netze an ein Kommunikationssystem anzuschalten. Die entsprechenden Verhältnisse sind in Figur 2 offenbart. Dabei wird davon ausgegangen, daß (beispielhaft) insgesamt 3 Teilnehmeranschlußnetze $AN_1$... $AN_3$ mit jeweils einer Schnittstelle an eine Mehrzahl (z.B. n) von peripheren Einrichtungen $LTG_1$...$LTG_n$ angeschlossen werden.

Dabei wird erfindungsgemäß eine V5.2 Schnittstelle mit j $\leq$ 16 PCM30 Systemen an j verschiedene periphere Einrichtungen $LTG_1$...$LTG_j$ angeschlossen. Im V5.2 Maximalausbau sind dies genau 16 periphere Einrichtungen.Ist eine periphere Einrichtung in der Lage, maximal i PCM30 Systeme ohne Konzentration zu terminieren, so bleiben k < i PCM30 Systeme unbeschaltet (Eingänge F).Demzufolge werden i - k PCM30 Systeme einer peripheren Einrichtung mit PCM-Systemen verschiedener V5.2 Schnittstellen beschaltet. Die dadurch verfügbare Koppelnetzzugangskapazität von k PCM30 Systemen wird zur Verstärkung des internen Nachrichtenverteilersystems im Koppelfeld SN verwendet. Dies geschieht zum Beispiel in der Weise, daß pro V5.2 Schnittstelle zusätzlich die Übertragungskapazität von maximal ca.

$$\frac{k \cdot 2 \quad MBit/sec}{i - k}$$

in Form von Mehrdurchschaltungen von 64 kBits Kanälen zur Verfügung gestellt werden kann. Im Ausführungsbeispiel sind i = 4 und k = 1 vorgesehen. Pro V5.2 Schnittstelle wird die zusätzlich zur Verfügung gestellte Übertragungskapazität dazu genutzt, das vorzugsweise vorteilhaft doppelt gerichtete, über das Koppelnetz SN geschaltete Ringsystem R über alle an der betreffenden V5.2 Schnittstelle beteiligten peripheren Einrichtungen aufzubauen. Hat eine V5.2 Schnittstelle folglich j ≦ 16 PCM30 Systeme, so werden diese an j peripheren Einrichtungen terminiert, welche über ein doppelt gerichtetes n x 64 kBit/sec Ringsystem R mit genau n gerichtetes , dieser V5.2 Schnittstelle zugeordnetes Ringsystem R mit genau j Elementen untereinander kommunizieren können. Terminiert eine periphere Einrichtung PCM30 Systeme verschiedener V5.2 Schnittstellen, so ist diese periphere Einrichtung gleichzeitig Element von unterschiedlichen, V5.2 individuellen Ringsystemen.

Das doppelt gerichtete Ringsystem R kann als Mehrkanalverbindung mit flexibel einstellbarer Bandbreite durchgeschaltet sein. Damit wäre dann eine besonders gute Ausnutzung der verwendeten Übertragungskapazität verbunden. Die Funktionsfähigkeit dieses Ringsystems R wird mit Hilfe von zyklisch übertragenen Testnachrichten während des normalen Betriebes überwacht. Werden Probleme erkannt, erfolgt eine Alarmierung, welche die für diesen Zweck in den Kommunikationssystemen vorgesehenen Entstörprozeduren anstößt. Weiterhin können alle peripheren Einrichtungen - soweit die Software und die Hardware resourcen dies zulassen - in Mischbeschaltung betrieben werden. Dies bedeutet, daß eine periphere Einrichtung gleichzeitig PCM30 Systeme von V5.2 Schnittstellen, V 5.1 Schnittstellen, PRA, Verbindungsleitungen zur Fernebene und Proprietary Interfaces terminieren und vermittlungstechnisch bearbeiten kann. Für alle nicht einer V5.2 Schnittstelle zugehörigen PCM30 Systeme werden hierbei keine Ringsysteme R eingerichtet. Eine derartige Vorgehensweise hat den Vorteil, daß keinerlei Einschränkungen für den Betreiber entstehen und eine Anschlußkostenreduktion damit verbunden ist.

Im weiteren kann in Abhängigkeit von der Größe der anzuschaltenden V5.2 Schnittstellen und ihrem erwarteten Wachstum die Bandbreite des V5.2 spezifischen Ringsystems R evtl. verkleinert werden. Damit würde der Grad der Unterbeschaltung der peripheren Einrichtungen verringert. Besitzt das interne Nachrichtenverteilsystem noch nutzbare Reserven und/oder sind die anzuschließenden V5.2 Schnittstellen durchweg klein (beispielsweise zwei bis vier PCM30 Systeme) so kann ggf. auf die Einführung eines zusätzlichen internen, V5.2 spezifischen Ringsystems R wie auch auf die Unterbeschaltung der peripheren Einrichtung gänzlich verzichtet werden. Auch in diesem Falle wäre eine Anschlußkostenreduktion mit einer derartigen Vorgehensweise für kleine V5.2 Schnittstellen verbunden.

Im Erweiterungsfall bzw. im Abrüstungsfall einer V 5.2 Schnittstelle wie auch im Falle des fehlerbedingten Ausfalls einer peripheren Einrichtung werden die hiervon betroffenen V 5.2 spezifischen Ringsysteme R dauerhaft bzw. temporär rekonfiguriert. Letzteres geschieht dabei automatisch durch die Steuereinrichtung des Kommunikationssystems, eine separate Bedieneraktivität ist hierfür nicht erforderlich. Insofern ist mit einer derartigen Vorgehensweise eine einfache Bedienung von Seiten des Bedienpersonals verbunden. Für V 5.2 Schnittstellen mit nur einem PCM-30 System wird auf die Einführung eines über das Koppelnetz geschalteten Kommunikationsringes verzichtet.

## Patentansprüche

1. Verfahren zum Anschluß einer Mehrzahl von Teilnehmeranschlußnetzen ($AN_1...AN_m$) mit jeweils einer Mehrzahl von Schnittstellen ($S_1 ...S_e$), insbesondere mit V5.2 Schnittstellen, an ein Kommunikationssystem, das ein Koppelfeld (SN) sowie eine weitere Mehrzahl von nichtredundanten peripheren Einrichtungen ($LTG_1...LTG_n$) aufweist,
**dadurch gekennzeichnet,**
daß die Schnittstellen ($S_1 ... S_e$) jeweils mit maximal einem PCM30 System an eine der nichtredundanten peripheren Einrichtungen ($LTG_1...LTG_n$) angeschlossen werden, und daß im Koppelfeld (SN) Kommunikationsringe derart zwischen den einzelnen peripheren Einrichtungen ($LTG_1... LTG_n$) geschaltet werden, daß die peripheren Einrichtungen ($LTG_1 ... LTG_n$), die mit der gleichen Schnittstelle verbunden sind, innerhalb eines Kommunikationsringes zusammengeführt werden

2. Verfahren nach Anspruch 1,
**dadurch gekennzeichnet,**
daß im Koppelfeld (SN) pro Schnittstelle ($S_1 ... Se$) je ein Kommunikationsring derart zwischen den einzelnen peripheren Einrichtungen ($LTG_1 ... LTG_n$) geschaltet wird, daß derselbe die peripheren Einrichtungen ($LTG_1 ... LTG_n$), die mit der gleichen Schnittstelle verbunden sind, zusammenführt.

3. Verfahren nach Anspruch 1 oder 2,
**dadurch gekennzeichnet,**
daß zur Verstärkung des internen Nachrichtenverteilsystems des Kommunikationssystems Koppelnetzzugangskapazität der peripheren Einrichtungen ($LTG_1 ... LTG_n$) herangezogen wird und damit gegebenenfalls die Mehrzahl der Schnittstellen ( $S_1 ... Se$) derart an die weitere Mehrzahl von nichtredundanten peripheren Einrichtungen ($LTG_1...LTG_n$) angeschaltet wird, daß wenigstens ein Eingang pro

peripherer Einrichtung (LTG$_1$... LTG$_n$) unbeschaltet bleibt.

4. Verfahren nach Anspruch 1 bis 3,
   **dadurch gekennzeichnet,**
   daß der im Koppelfeld (SN) geschaltete, wenigstens eine Kommunikationsring doppelt gerichtet ausgebildet ist und als Mehrkanalverbindung durchschaltbar ist.

5. Verfahren nach Anspruch 1 bis 4,
   **dadurch gekennzeichnet,**
   daß die Funktionsfähigkeit des wenigstens einen Kommunikationsringes mit Hilfe zyklisch übertragener Testnachrichten überwacht wird.

6. Verfahren nach Anspruch 1 bis 5,
   **dadurch gekennzeichnet,**
   daß die Teilnehmer betreffenden Informationen gegebenenfalls über den gemeinsamen Kommunikationsring von einer der nichtredundanten peripheren Einrichtungen (LTG$_1$...LTG$_n$) zu der nichtredundanten peripheren Einrichtung (LTG$_1$...LTG$_n$), die diese Informationen benötigt, geleitet werden.

7. Verfahren nach einem der vorstehenden Ansprüche,
   **dadurch gekennzeichnet,**
   daß die Bandbreite pro Kommunikationsring flexibel einstellbar ist.

8. Verfahren nach einem der vorstehenden Ansprüche,
   **dadurch gekennzeichnet,**
   daß bei Ausfall einer nichtredundanten peripheren Einrichtung (LTG$_1$ ... LTG$_n$) oder bei Verkleinerung bestehender Schnittstellen (S$_1$ ... Se) die hiervon betroffenen Kommunikationsringe derart umkonfiguriert werden, daß die ausgefallene, nichtredundante periphere Einrichtung bzw. die für die betreffenden Schnittstellen (S$_1$ ... Se) nicht weiter benötigten nichtredundanten peripheren Einrichtungen (LTG$_1$ ... LTG$_n$) nicht mehr in die betroffenen Kommunikationsringe eingebunden sind.

9. Verfahren nach einem der vorstehenden Ansprüche,
   **dadurch gekennzeichnet,**
   daß bei Wiederinbetriebnahme ausgefallener, nichtredundanter peripherer Einrichtungen (LTG$_1$ ... LTG$_n$) oder bei Erweiterungen bestehender Schnittstellen (S$_1$ ... Se) durch Einbeziehung beliebiger peripherer Einrichtungen innerhalb der Menge der nichtredundanten peripheren Einrichtungen (LTG$_1$ ... LTG$_n$) die hiervon betroffenen Kommunikationsringe derart umkonfiguriert werden, daß erstere in dieselben eingebunden werden.

10. Verfahren nach einem der vorstehenden Ansprüche,
    **dadurch gekennzeichnet,**
    daß der Protokollabschluß der über das Koppelfeld geschalteten Kommunikationsringe als Hardware-Komponente (ASIC) in der Weise realisiert ist, daß nur jene Nachrichten innerhalb einer peripheren Einrichtung von einem Ring genommen werden, welche an die betreffende periphere Einrichtung gerichtet sind.

11. Verfahren nach einem der vorstehenden Ansprüche,
    **dadurch gekennzeichnet,**
    daß zentrale, außerhalb der peripheren Einrichtungen befindliche Protokollabschlußeinrichtungen in die jeweiligen über die nichtredundanten peripheren Einrichtungen geschalteten Kommunikationsringe einbezogen werden zur Bereitstellung der für die betreffenden Schnittstellen notwendigen Protokollabschlußkapazitäten.

12. Verfahren nach einem der vorstehenden Ansprüche,
    **dadurch gekennzeichnet,**
    daß die peripheren Einrichtungen redundant ausgebildet, insbesondere gedoppelt sind und an jede redundant ausgebildete periphere Einrichtung eine oder mehrere V5.2 Schnittstellen mit jeweils einem oder mehreren PCM30 Systemen angeschlossen werden können.

13. Verfahren nach einem der vorstehenden Ansprüche,
    **dadurch gekennzeichnet,**
    daß die Schnittstellen (S$_1$ ... Se) der betrachteten Teilnehmeranschlußnetzwerke (AN$_1$ ... AN$_m$) über jeweils mindestens ein PCM24 System an ein Kommunikationssystem angeschlossen werden.

## FIG 1

# FIG 2